# EUROPEAN PATENT APPLICATION

(11) **EP 4 488 137 A2**
(43) Date of publication of application: **08.01.2025**
(21) Application number: 24171225.6
(22) Date of filing: 19.04.2024
(51) Int. Cl.: B60W 30/14

(54) **CONTROLLER AND CONTROL METHOD**

(30) Priority: 19.05.2023 JP 2023083417
(71) Applicant: Robert Bosch GmbH, 70442 Stuttgart (DE)
(72) Inventor: Takii, Hiromasa, Kanagawa, 2248501 (JP)
(74) Representative: Isarpatent

(57) **Abstract**

The invention obtains a controller and a control method capable of improving safety of a straddle-type vehicle. In the controller and the control method according to the invention, an execution section of the controller executes speed control action to automatically control a speed of an own vehicle without relying on an accelerating/decelerating operation by a rider of the own vehicle. The execution section executes acceleration suppressing action as action to suppress acceleration of the own vehicle in the speed control action executed in the own vehicle on the basis of statistical data in which location information is associated with a rider's operation information of each of plural vehicles as straddle-type vehicles other than the own vehicle in the speed control action executed in each of the other vehicles.

## Description

### BACKGROUND OF THE INVENTION

### 1. Field of the Invention

The present invention relates to a controller and a control method capable of improving safety of a straddle-type vehicle.

### 2. Description of the Background Art

Conventionally, various techniques for assisting with driving by a rider of a straddle-type vehicle such as a motorcycle have been proposed. For example, a driver-assistance system is disclosed in JP2009-116882A. The driver assistance system warns the motorcycle rider that the motorcycle inappropriately approaches an obstacle on the basis of information detected by a sensor device that detects the obstacle present in a travel direction or substantially in the travel direction.

By the way, as the technique for assisting with driving of the vehicle, speed control action has been available. In the speed control action, a vehicle speed is automatically controlled without relying on an accelerating/decelerating operation by the driver of the vehicle. It is considered to apply the speed control action to the straddle-type vehicle. Here, body behavior of the straddle-type vehicle is more unstable and agile than that of a four-wheeled automobile and the like. Accordingly, it is especially desired to improve safety in a situation where the speed of the straddle-type vehicle is automatically controlled by the speed control action.

The invention has been made with the above-described problem as the background and therefore obtains a controller and a control method capable of improving safety of a straddle-type vehicle.

### SUMMARY OF THE INVENTION

A controller according to the invention is a controller that controls behavior of a straddle-type vehicle, and includes an execution section that executes speed control action to automatically control a speed of an own vehicle without relying on an accelerating/decelerating operation by a rider of the own vehicle. The execution section executes acceleration suppressing action as action to suppress acceleration of the own vehicle in the speed control action executed in the own vehicle on the basis of statistical data in which location information is associated with a rider's operation information of each of plural vehicles as straddle-type vehicles other than the own vehicle in the speed control action executed in each of the other vehicles.

A controller according to the invention is a controller that controls behavior of a straddle-type vehicle, and includes an execution section that executes speed control action to automatically control a speed of an own vehicle without relying on an accelerating/decelerating operation by a rider of the own vehicle. The controller further includes an output section that outputs the rider's operation information of the own vehicle in the speed control action executed in the own vehicle. The rider's operation information is information associated with location information in statistical data used for acceleration suppressing action that is action to suppress acceleration of another vehicle as a straddle-type vehicle other than the own vehicle in the speed control action executed in the other vehicle.

A control method according to the invention is a control method for controlling behavior of a straddle-type vehicle, and includes executing speed control action by an execution section of a controller to automatically control a speed of an own vehicle without relying on an accelerating/decelerating operation by a rider of the own vehicle. The execution section executes acceleration suppressing action as action to suppress acceleration of the own vehicle in the speed control action executed in the own vehicle on the basis of statistical data in which location information is associated with a rider's operation information of each of plural vehicles as straddle-type vehicles other than the own vehicle in the speed control action executed in each of the other vehicles.

A control method according to the invention is a control method for controlling behavior of a straddle-type vehicle, includes executing speed control action by an execution section of a controller to automatically control a speed of an own vehicle without relying on an accelerating/decelerating operation by a rider of the own vehicle, and further includes outputting the rider's operation information of the own vehicle by an output section of the controller in the speed control action executed in the own vehicle. The rider's operation information is information associated with location information in statistical data used for acceleration suppressing action that is action to suppress acceleration of another vehicle as a straddle-type vehicle other than the own vehicle in the speed control action executed in the other vehicle.

In the controller and the control method according to the invention, the execution section of the controller executes the speed control action to automatically control the speed of the own vehicle without relying on the accelerating/decelerating operation by the rider of the own vehicle. The execution section executes the acceleration suppressing action as the action to suppress the acceleration of the own vehicle in the speed control action executed in the own vehicle on the basis of the statistical data in which the location information is associated with the rider's operation information of each of the plural vehicles as the straddle-type vehicles other than the own vehicle in the speed control action executed in each of the other vehicles. As a result, the acceleration of the own vehicle in the speed control action can be suppressed in consideration of the operation performed by the rider of each of the other vehicles, which travel by using the speed control action, at each point. Thus, it is possible to suppress a reduction in safety caused by the acceleration of the own vehicle in the speed control action. Therefore, it is possible to improve the safety of the straddle-type vehicle.

### BRIEF DESCRIPTION OF THE DRAWINGS

Fig. 1 is a schematic view illustrating an outline configuration of a straddle-type vehicle according to an embodiment of the invention.
Fig. 2 is a block diagram illustrating an example of a functional configuration of a controller according to the embodiment of the invention.
Fig. 3 is a block diagram illustrating an example of a functional configuration of a server according to the embodiment of the invention.
Fig. 4 is a flowchart illustrating an example of a processing procedure that is executed by the controller according to the embodiment of the invention.
Fig. 5 is a table schematically illustrating an example of statistical data that is stored in the server according to the embodiment of the invention.

### DETAILED DESCRIPTION OF THE INVENTION

A description will hereinafter be made on a controller and a control method according to the invention with reference to the drawings.

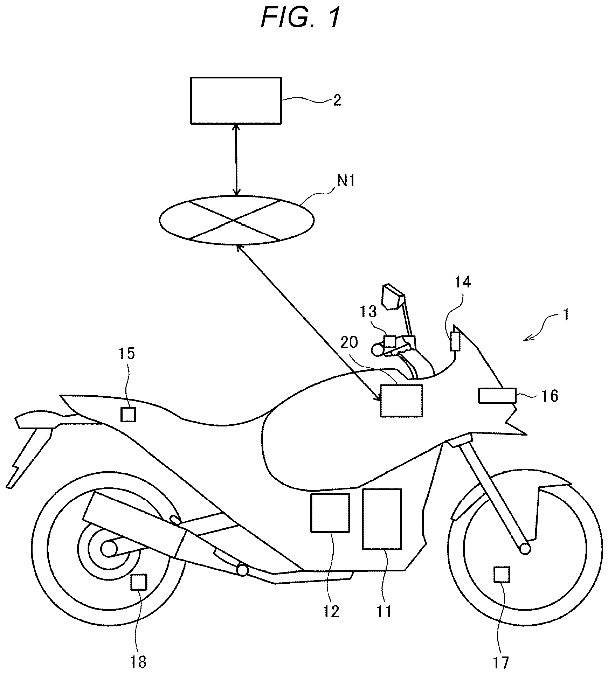

Hereinafter, a description will be made on a controller that is used for a two-wheeled motorcycle (see a straddle-type vehicle 1 in Fig. 1). However, a vehicle as a control target of the controller according to the invention may be a straddle-type vehicle other than the two-wheeled motorcycle. The straddle-type vehicle means a vehicle that a rider straddles. Examples of the straddle-type vehicle are motorcycles (a two-wheeled motor vehicle and a three-wheeled motor vehicle), a bicycle, and an all-terrain vehicle. The motorcycles include a vehicle having an engine as a power source, a vehicle having an electric motor as a power source, and the like. Examples of the motorcycles are a motorbike, a scooter, and an electric scooter. The bicycle means a vehicle capable of traveling forward on a road by a depression force applied to pedals by a rider. Examples of the bicycle are a normal bicycle, an electrically-assisted bicycle, and an electric bicycle.

In addition, the following description will be made on a case where the engine (more specifically, an engine 11 in Fig. 1, which will be described below) is mounted as a drive source capable of outputting power for driving a drive wheel. However, as the drive source, a drive source other than the engine (for example, the electric motor) may be mounted, or a plurality of drive sources may be mounted.

Furthermore, the following description will be made on a case where a control unit (more specifically, a hydraulic pressure control unit 12 in Fig. 1, which will be described below) that controls a hydraulic pressure of a brake fluid is employed as a control unit for a braking force generated to a wheel. However, as the control unit for the braking force generated to the wheel, a control unit (a so-called brake-by-wire) that controls a position of a braking section itself for the wheel with an electric signal may be employed.

A configuration, action, and the like, which will be described below, merely constitute one example. The controller and the control method according to the invention are not limited to a case with such a configuration, such action, and the like.

The same or similar description will be simplified appropriately or will not be made below. In the drawings, the same or similar members or portions will not be denoted by a reference sign or will be denoted by the same reference sign. A detailed structure will appropriately be illustrated in a simplified manner or will not be illustrated.

### <Configuration of Straddle-Type Vehicle>

A description will be made on a configuration of the straddle-type vehicle 1 according to the embodiment of the invention with reference to Fig. 1 to Fig. 3.

Fig. 1 is a schematic view illustrating an outline configuration of the straddle-type vehicle 1. The straddle-type vehicle 1 is a two-wheeled motorcycle that corresponds to an example of the straddle-type vehicle according to the invention. As illustrated in Fig. 1, the straddle-type vehicle 1 includes the engine 11, the hydraulic pressure control unit 12, an input device 13, a navigation system 14, an inertial measurement unit (IMU) 15, a surrounding environment sensor 16, a front-wheel rotational frequency sensor 17, a rear-wheel rotational frequency sensor 18, and a controller (ECU) 20.

The straddle-type vehicle 1 and a server 2 are communicable with each other wirelessly via a wireless communication network N1. Fig. 1 illustrates the single straddle-type vehicle 1 to facilitate understanding. However, in reality, the plural straddle-type vehicles 1 can communicate with the server 2 concurrently via the communication network N1. In the present specification, the particular straddle-type vehicle 1 of the plural straddle-type vehicles 1 will also be referred to as the own vehicle 1.

The engine 11 corresponds to an example of a drive source for the straddle-type vehicle 1, and can output power for driving a drive wheel (more specifically, a rear wheel). For example, the engine 11 is provided with: one or plural cylinders, each of which is formed with a combustion chamber therein; a fuel injector that injects fuel into the combustion chamber; and an ignition plug. When the fuel is injected from the fuel injector, air-fuel mixture containing air and the fuel is produced in the combustion chamber, and the air-fuel mixture is then ignited by the ignition plug and burned. Consequently, a piston provided in the cylinder reciprocates to cause a crankshaft to rotate. In addition, a throttle valve is provided to an intake pipe of the engine 11, and an intake air amount to the combustion chamber varies according to a throttle opening amount that is an opening amount of the throttle valve.

The hydraulic pressure control unit 12 is a unit that has a function to control a braking force generated to a wheel. For example, the hydraulic pressure control unit 12 has components (for example, a control valve and a pump) that are provided on an oil channel connecting a master cylinder and a wheel cylinder to control a brake hydraulic pressure in the wheel cylinder. The braking force generated to the wheel is controlled when action of the components of the hydraulic pressure control unit 12 is controlled. The hydraulic pressure control unit 12 may separately control the braking force generated to a front wheel and the braking force generated to the rear wheel, or may only control the braking force generated to one of the front wheel and the rear wheel.

The input device 13 accepts various operations by a rider. For example, the input device 13 is provided to a handlebar, and includes a push button and the like used for the rider's operation. Information on the rider's operation using the input device 13 is output to the controller 20.

The navigation system 14 is a system that guides the rider along a route from a current location of the straddle-type vehicle 1 to a destination desired by the rider. The navigation system 14 displays various types of information on route guidance (for example, the current location of the straddle-type vehicle 1, a travel route as a guidance target, a location of the destination, a distance on the travel route from the current location of the straddle-type vehicle 1 to the destination, a time required to arrive at the destination, and the like). In addition, the navigation system 14 can acquire location information of the straddle-type vehicle 1 on the basis of information transmitted from the Global Positioning System (GPS) satellite.

The IMU 15 includes a three-axis gyroscope sensor and a three-directional acceleration sensor, and detects a posture of the straddle-type vehicle 1. The IMU 15 is provided to a trunk of the straddle-type vehicle 1, for example. For example, the IMU 15 detects a pitch angle of the straddle-type vehicle 1 and outputs a detection result. The IMU 15 may detect another physical quantity that can substantially be converted to the pitch angle of the straddle-type vehicle 1. The pitch angle corresponds to an angle representing a tilt in a longitudinal direction of a body (more specifically, the trunk) of the straddle-type vehicle 1 with respect to a horizontal direction. In other words, the pitch angle of the straddle-type vehicle 1 corresponds to an angle representing how much the body of the straddle-type vehicle 1 rotates in a pitch direction with respect to the horizontal direction. The pitch direction is a rotational direction with an axis in a vehicle right-left direction being a center. For example, the IMU 15 detects a lean angle of the straddle-type vehicle 1 and outputs a detection result. The IMU 15 may detect another physical quantity that can substantially be converted to the lean angle of the straddle-type vehicle 1. The lean angle corresponds to an angle representing a tilt in a rolling direction of the body (more specifically, the trunk) of the straddle-type vehicle 1 with respect to an upper vertical direction.

The surrounding environment sensor 16 detects surrounding environment information on environment around the straddle-type vehicle 1. More specifically, the surrounding environment sensor 16 is provided to a front portion of the straddle-type vehicle 1 and detects the surrounding environment information in front of the straddle-type vehicle 1. The surrounding environment information detected by the surrounding environment sensor 16 is output to the controller 20.

The surrounding environment information that is detected by the surrounding environment sensor 16 may be information on a distance to or an orientation of a target object (for example, a relative position, a relative distance, a relative speed, relative acceleration, or the like) that is located around the straddle-type vehicle 1, or may be a characteristic of the target object (for example, a type of the target object, a shape of the target object itself, a mark on the target object, or the like) that is located around the straddle-type vehicle 1. Examples of the surrounding environment sensor 16 are a radar, a Lidar sensor, an ultrasonic sensor, and a camera.

The surrounding environment information can also be detected by a surrounding environment sensor mounted to another vehicle or by an infrastructure facility. In other words, the controller 20 can also acquire the surrounding environment information via wireless communication with the other vehicle or the infrastructure facility.

The front-wheel rotational frequency sensor 17 is a wheel rotational frequency sensor that detects a rotational frequency of the front wheel (for example, a rotational frequency of the front wheel per unit time [rpm], a travel distance of the front wheel per unit time [km/h], or the like), and outputs a detection result. The front-wheel rotational frequency sensor 17 may detect another physical quantity that can substantially be converted to the rotational frequency of the front wheel. The front-wheel rotational frequency sensor 17 is provided to the front wheel.

The rear-wheel rotational frequency sensor 18 is a wheel rotational frequency sensor that detects a rotational frequency of the rear wheel (for example, the rotational frequency of the rear wheel per unit time [rpm], a travel distance of the rear wheel per unit time [km/h], or the like), and outputs a detection result. The rear-wheel rotational frequency sensor 18 may detect another physical quantity that can substantially be converted to the rotational frequency of the rear wheel. The rear-wheel rotational frequency sensor 18 is provided to the rear wheel.

The controller 20 controls behavior of the straddle-type vehicle 1. For example, a part or whole of the controller 20 is a microcomputer, a microprocessor unit, or the like. Alternatively, the part or the whole of the controller 20 may be one whose firmware and the like can be updated, or may be a program module or the like that is executed by a command from a CPU or the like, for example. The controller 20 may be provided as one unit or may be divided into multiple units, for example.

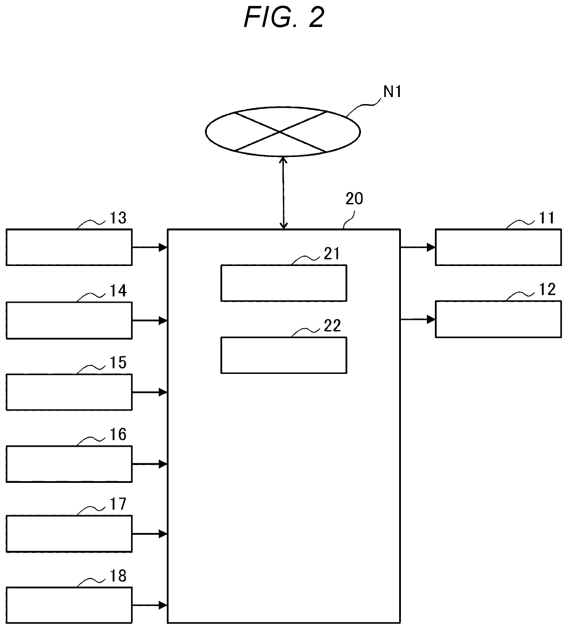

Fig. 2 is a block diagram illustrating an example of a functional configuration of the controller 20. As illustrated in Fig. 2, the controller 20 includes a communication section 21 and an execution section 22, for example. The controller 20 can acquire information from the input device 13, the navigation system 14, the IMU 15, the surrounding environment sensor 16, the front-wheel rotational frequency sensor 17, and the rear-wheel rotational frequency sensor 18, and can output a control command to the engine 11 and the hydraulic pressure control unit 12. In the present specification, acquisition of the information can include extraction, generation (for example, calculation), and the like of the information.

The communication section 21 communicates with the server 2 wirelessly via the communication network N1. The communication section 21 corresponds to an example of the output section that outputs information.

The execution section 22 executes various types of control by controlling action of each of the devices in the straddle-type vehicle 1. For example, the execution section 22 controls the action of the engine 11 and the hydraulic pressure control unit 12.

In particular, the execution section 22 can execute speed control action. The speed control action is action to automatically control a speed of the own vehicle 1 without relying on an accelerating/decelerating operation (that is, an accelerator operation and a brake operation) by the rider of the own vehicle 1.

Hereinafter, a description will be made on an example in which adaptive cruise control is executed as the speed control action. The adaptive cruise control is action to automatically control the speed of the own vehicle 1 such that a positional relationship between the own vehicle 1 and a target approaches a target positional relationship. The target is not limited to a vehicle but may be a traffic light or the like.

However, the speed control action executed by the execution section 22 is not limited to the adaptive cruise control. For example, the execution section 22 may execute action other than the adaptive cruise control as the action to automatically control the speed of the own vehicle 1 such that the positional relationship between the own vehicle 1 and the target approaches the target positional relationship (for example, action that is not canceled by the rider's accelerator operation and changes the target positional relationship according to an operation amount of the accelerator operation). Alternatively, the execution section 22 may execute a cruise control mode as the speed control action. In the cruise control mode, the execution section 22 controls the speed of the straddle-type vehicle 1 in a manner to approach a preset target speed.

The execution section 22 initiates the adaptive cruise control with the rider's operation using the input device 13 as a trigger, for example. In the adaptive cruise control, the execution section 22 automatically controls the speed of the own vehicle 1 without relying on the accelerating/decelerating operation by the rider. The execution section 22 can control the speed of the own vehicle 1, for example, on the basis of information on the speed of the own vehicle 1 that is acquired on the basis of the rotational frequency of the front wheel and the rotational frequency of the rear wheel. In the control for the speed of the own vehicle 1, for example, the execution section 22 can automatically generate acceleration to the own vehicle 1 by controlling the action of the engine 11, and can automatically generate deceleration to the own vehicle 1 by controlling the action of the hydraulic pressure control unit 12. The adaptive cruise control is canceled when the rider performs a particular operation such as the brake operation.

In the adaptive cruise control, for example, a target inter-vehicle distance that is a target value of an inter-vehicle distance between the own vehicle 1 and a preceding vehicle is set, and the execution section 22 controls the speed of the own vehicle 1 such that the inter-vehicle distance between the own vehicle 1 and the preceding vehicle is maintained at the target inter-vehicle distance. In other words, such a positional relationship that the inter-vehicle distance between the own vehicle 1 and the preceding vehicle is the target inter-vehicle distance corresponds to the target positional relationship. Here, the inter-vehicle distance may mean a distance in a direction along a lane (more specifically, a lane in which the own vehicle 1 travels) or may mean a straight-line distance. For example, the controller 20 acquires the inter-vehicle distance between the own vehicle 1 and the preceding vehicle on the basis of the surrounding environment information of the own vehicle 1. Then, based on the thus-acquired inter-vehicle distance, the execution section 22 can control the speed of the own vehicle 1 as described above.

However, in the adaptive cruise control, for example, a target passing time difference is set. The target passing time difference is a target value of a passing time difference (more specifically, a time required for the own vehicle 1 to pass a current location of the preceding vehicle from a current time point). Thus, the execution section 22 may control the speed of the own vehicle 1 in a manner to maintain the passing time difference to be the target passing time difference. In this case, a positional relationship with which the passing time difference matches the target passing time difference corresponds to the target positional relationship. For example, the controller 20 acquires the passing time difference on the basis of the surrounding environment information of the own vehicle 1. Then, based on the thus-acquired passing time difference, the execution section 22 can control the speed of the own vehicle 1 as described above.

The server 2 in Fig. 1 collects and manages the information from the plural straddle-type vehicles 1 and transmits, to each of the straddle-type vehicles 1, the information used for the adaptive cruise control of the respective straddle-type vehicles 1. For example, a part or whole of the server 2 is a microcomputer, a microprocessor unit, or the like. Alternatively, the part or the whole of the server 2 may be one whose firmware and the like can be updated, or may be a program module or the like that is executed by a command from a CPU or the like, for example. The server 2 may be provided as one unit or may be divided into multiple units, for example.

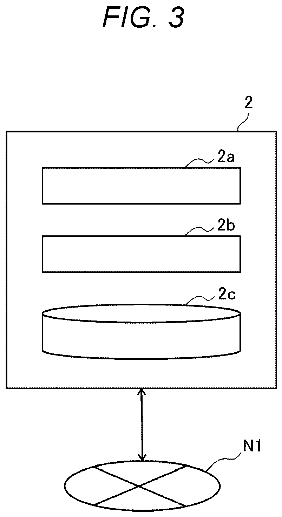

Fig. 3 is a block diagram illustrating an example of a functional configuration of the server 2. As illustrated in Fig. 3, the server 2 includes a communication section 2a, a generation section 2b, and a storage section 2c, for example.

The communication section 2a communicates with each of the straddle-type vehicles 1 via the communication network N1. More specifically, the communication section 2a communicates with the controller 20 of each of the straddle-type vehicles 1.

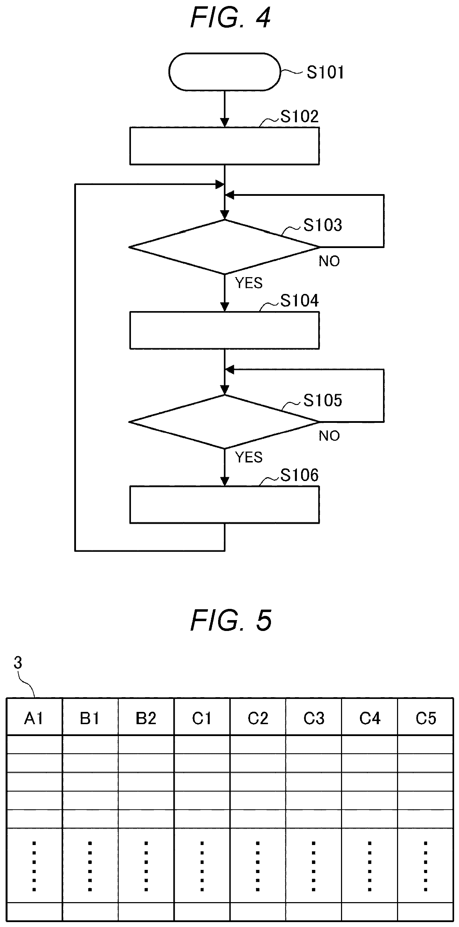

The generation section 2b generates statistical data (see statistical data 3 in Fig. 5, which will be described below) used for the adaptive cruise control of the straddle-type vehicle 1 on the basis of the information collected from the plural straddle-type vehicles 1. The statistical data will be described in detail below.

The storage section 2c stores various types of information. For example, the storage section 2c stores the information received by the communication section 2a. The generation section 2b generates the statistical data on the basis of the information stored in the storage section 2c. The storage section 2c also stores the statistical data generated by the generation section 2b.

### <Action of Controller>

A description will be made on action of the controller 20 according to the embodiment of the invention with reference to Fig. 4 and Fig. 5.

As described above, the execution section 22 of the controller 20 according to this embodiment executes the adaptive cruise control. Here, body behavior of the straddle-type vehicle 1 is more unstable and agile than that of the four-wheeled automobile and the like. Thus, in this embodiment, in order to improve safety in a situation where the speed of the straddle-type vehicle 1 is automatically controlled by the adaptive cruise control, the execution section 22 can execute acceleration suppressing action. As will be described below, the acceleration suppressing action is action to suppress the acceleration of the own vehicle 1 in the adaptive cruise control, which is executed in the own vehicle 1. Hereinafter, a description will be made on processing related to the acceleration suppressing action executed by the controller 20.

Fig. 4 is a flowchart illustrating an example of a processing procedure that is executed by the controller 20. A control flow illustrated in Fig. 4 is initiated when the adaptive cruise control is being executed. Step S101 in Fig. 4 corresponds to initiation of the control flow illustrated in Fig. 4.

When the control flow illustrated in Fig. 4 is initiated, in step S102, the execution section 22 receives, from the server 2, information on an acceleration suppression point at which it is recommended to suppress the acceleration of the own vehicle 1 in the adaptive cruise control.

Fig. 5 is a schematic view illustrating an example of the statistical data 3 stored in the server 2. As described above, the server 2 stores the statistical data 3 used for the adaptive cruise control. In step S102, for example, the execution section 22 transmits, to the server 2, a transmission request of the information on the acceleration suppression point and the location information of the own vehicle 1. Then, based on the statistical data 3, the server 2 that has received the transmission request determines the acceleration suppression point that exists within a predetermined range including the current location of the own vehicle 1, and transmits the information on the acceleration suppression point to the controller 20. For example, the server 2 transmits, to the controller 20, the acceleration suppression point that exists in an area including the travel route from the current location of the own vehicle 1 to the destination. Here, the server 2 may transmit, to the controller 20, the acceleration suppression point that exists in an area centered on the current location of the own vehicle 1 each time the location of the own vehicle 1 is changed.

In the example illustrated in Fig. 5, the statistical data 3 has a data structure in a data table format in which pieces of information in columns correspond to each other in each row. However, the statistical data 3 may have the structure in a format other than the data table format.

The statistical data 3 is data acquired by subjecting the various types of the information, which are transmitted from each of the straddle-type vehicles 1 executing the adaptive cruise control, to statistical processing. The information in each row of the statistical data 3 constitutes an information group that is transmitted from the certain straddle-type vehicle 1 at certain timing. That is, the information in the single row of the statistical data 3 is a set of the information that is associated with each other and acquired by the single straddle-type vehicle 1 executing the adaptive cruise control during the execution of the adaptive cruise control. Hereafter, the set of the information grouped in the same row of the statistical data 3 will also be referred to as a data row.

For example, each of the straddle-type vehicles 1 transmits, to the server 2, the information acquired during the execution of the adaptive cruise control when needed. For example, each of the straddle-type vehicles 1 transmits the single row of the data to the server 2 at predetermined time intervals. However, each of the straddle-type vehicles 1 may collectively transmit the information, which is acquired during the execution of the adaptive cruise control, to the server 2 at the end of travel. The server 2 updates the statistical data 3 by incorporating the data row, which is the newly received single row of the information, into the statistical data 3.

Information in a column A1 of the statistical data 3 is the location information. In each of the straddle-type vehicles 1, the controller 20 can acquire the location information by using the navigation system 14, for example. As illustrated in Fig. 5, in each of the rows in the statistical data 3, the various types of the information in a column B1, a column B2, a column C1, a column C2, a column C3, a column C4, and a column C5 are associated with the location information in the column A1.

Information in the column B1 and the column B2 is the rider's operation information. Just as described, in the statistical data 3, the rider's operation information is associated with the location information. In other words, the statistical data 3 includes information indicating what operation has been performed at which point. Information in the column C1, the column C2, the column C3, the column C4, and the column C5 is additional information other than the rider's operation information.

The information in the column B1 of the statistical data 3 is information on an operation to cancel the adaptive cruise control. For example, in each of the straddle-type vehicles 1, in the case where the operation to cancel the adaptive cruise control has been performed using the input device 13, or in the case where the brake operation has been performed to cancel the adaptive cruise control, the controller 20 determines that the operation to cancel the adaptive cruise control has been performed.

The information in the column B2 of the statistical data 3 is information on an operation to change the body behavior. For example, in each of the straddle-type vehicles 1, in the case where it is determined that the pitch angle or the lean angle of the straddle-type vehicle 1 has been changed significantly on the basis of the detection result by the IMU 15, the controller 20 determines that the operation to change the body behavior has been performed. Alternatively, in the case where it is determined that the high deceleration has occurred to the straddle-type vehicle 1, the controller 20 may determine that the brake operation has been performed as the operation to change the body behavior.

The information in the column C1 of the statistical data 3 is environment information. The environment information is information on external environment of the straddle-type vehicle 1. For example, the environment information can include weather information, season information, time of day information, brightness information, temperature information, humidity information, road surface information, and the like. An example of the time of day information is information on whether current time is morning, noon, evening, or night. An example of the brightness information is information on brightness around the straddle-type vehicle 1. Examples of the road surface information are information on a crack on a road surface, information on a dent on the road surface, and information on an obstacle (for example, a tree branch, a leaf, or the like) on the road surface. In each of the straddle-type vehicles 1, the controller 20 can acquire the environment information on the basis of the information received from the infrastructure facility or the detection result by the IMU 15, for example.

The information in the column C2 of the statistical data 3 is vehicle information. The vehicle information is information on the straddle-type vehicle 1 itself. For example, the vehicle information can include model information, tire information, displacement information, and the like. The tire information includes information on a type of tires mounted to the straddle-type vehicle 1, and information on an elapsed time since last tire replacement, and the like. In each of the straddle-type vehicles 1, the controller 20 stores the vehicle information in advance, for example.

The information in the column C3 of the statistical data 3 is at least one of occupant information and loaded article information. The occupant information is information on an occupant riding the straddle-type vehicle 1. Examples of the occupant information are information on the number of the occupants and information on weight of the occupants. The loaded article information is information on a loaded article on the straddle-type vehicle 1. Examples of the loaded article information are information on presence or absence of the loaded article, information on the number of the loaded articles, and information on weight of the loaded articles. In each of the straddle-type vehicles 1, the controller 20 can acquire the occupant information and the loaded article information on the basis of detection results by various sensors including a seating sensor, for example.

The information in the column C4 of the statistical data 3 is setting information of the adaptive cruise control. For example, a plurality of modes is available for the adaptive cruise control, and control characteristics, such as ease of execution of anti-lock brake control and a degree of effectiveness of the anti-lock brake control, vary by mode. An example of the setting information of the adaptive cruise control is information on a setting of the mode of the adaptive cruise control. In each of the straddle-type vehicles 1, for example, the controller 20 stores the setting information of the adaptive cruise control.

The information in the column C5 of the statistical data 3 is the rider's driving characteristic information. The rider's driving characteristic information can include various types of information on the rider's driving characteristics. Examples of the rider's driving characteristic information are an evaluation value indicating the rider's proficiency level, rough information expressing the proficiency level in several levels, and information on frequency of rapid acceleration and rapid deceleration by the rider. In each of the straddle-type vehicles 1, the controller 20 updates and stores the rider's driving characteristic information when needed on the basis of information on history of how the rider has driven the straddle-type vehicle 1, for example.

As described above, in step S102, based on the statistical data 3, the server 2 determines the acceleration suppression point at which it is recommended to suppress the acceleration of the own vehicle 1 in the adaptive cruise control. Then, the server 2 transmits the information on the acceleration suppression point to the controller 20.

For example, the server 2 determines, as the acceleration suppression point, a point at which the operation to cancel the adaptive cruise control is frequently performed (that is, a point at which the adaptive cruise control is frequently canceled). For example, the operation to cancel the adaptive cruise control is frequently performed near an Electronic Toll Collection System (ETC) gate, on a road surface on which many leaves are accumulated, and the like. At such points, the acceleration of the own vehicle 1 in the adaptive cruise control is likely to be unexpected by the rider of the own vehicle 1.

As described above, in the statistical data 3, the information on the operation to cancel the adaptive cruise control in the column B1 is associated with the location information in the column A1. Accordingly, by referring to the information on the operation to cancel the adaptive cruise control in the column B1 of the statistical data 3, the server 2 can determine, as the acceleration suppression point, the point at which the operation to cancel the adaptive cruise control is frequently performed. For example, the server 2 extracts all the data rows in each of which the location information of the certain point is stored in the column A1. Then, in the case where a proportion of the data rows, in each of which the information indicating that the operation to cancel the adaptive cruise control has been performed is stored in the column B1, to all the extracted data rows exceeds a threshold value, the server 2 determines such a point as the acceleration suppression point. The server 2 repeatedly executes such processing for each point.

In addition, for example, the server 2 determines, as the acceleration suppression point, a point at which the operation to change the body behavior is frequently performed (that is, a point at which the body behavior of the straddle-type vehicle 1 is significantly changed). For example, the operation to change the body behavior is frequently performed on a rough road surface such as an unpaved road. At such a point, the acceleration of the own vehicle 1 in the adaptive cruise control is likely to be unexpected by the rider of the own vehicle 1.

As described above, in the statistical data 3, the information on the operation to change the body behavior in the column B2 is associated with the location information in the column A1. Accordingly, by referring to the information on the operation to change the body behavior in the column B2 of the statistical data 3, the server 2 can determine, as the acceleration suppression point, the point at which the operation to change the body behavior is frequently performed. For example, the server 2 extracts all the data rows in each of which the location information of the certain point is stored in the column A1. Then, in the case where a proportion of the data rows, in each of which the information indicating that the operation to change the body behavior has been performed is stored in the column B2, to all the extracted data rows exceeds a threshold value, the server 2 determines such a point as the acceleration suppression point. The server 2 repeatedly executes such processing for each point.

The server 2 may determine, as the acceleration suppression points, both of the point at which the operation to cancel the adaptive cruise control is frequently performed and the point at which the operation to change the body behavior is frequently performed, or may determine only one of these points as the acceleration suppression point.

Here, in the statistical data 3, as described above, in addition to the location information in the column A1, the additional information in the column C1, the column C2, the column C3, the column C4, and the column C5 is further associated with the rider's operation information in the column B1 and the column B2. Accordingly, the server 2 can determine the acceleration suppression point by extracting the information that matches the current situation of the own vehicle 1 from the statistical data 3 with reference to the additional information in the column C1, the column C2, the column C3, the column C4, and the column C5.

For example, the server 2 may determine the acceleration suppression point by extracting the information that matches the current external environment of the own vehicle 1 from the statistical data 3 with reference to the environment information in the column C1. Alternatively, for example, in the case where the current weather is rain, the server 2 may only extract the data row in which the information indicating that the weather is rain is stored in the column C1, and may only use the extracted data row to determine the acceleration suppression point as described above.

Further alternatively, for example, the server 2 may determine the acceleration suppression point by extracting the information that matches the vehicle information of the own vehicle 1 from the statistical data 3 with reference to the vehicle information in the column C2. For example, the server 2 may only extract the data row in which the information on the same model as the model of the own vehicle 1 is stored in the column C2, and may only use the extracted data row to determine the acceleration suppression point as described above.

Further alternatively, for example, the server 2 may determine the acceleration suppression point by extracting the information that matches the information on the occupant or the loaded article of the own vehicle 1 from the statistical data 3 with reference to the occupant information or the loaded article information in the column C3. For example, in the case where there is no passenger of the own vehicle 1, the server 2 may only extract the data row in which the information indicating that there is no passenger is stored in the column C3, and may only use the extracted data row to determine the acceleration suppression point as described above.

Further alternatively, for example, the server 2 may determine the acceleration suppression point by extracting the information that matches the setting of the adaptive cruise control for the own vehicle 1 from the statistical data 3 with reference to the setting information of the adaptive cruise control in the column C4. For example, the server 2 may only extract the data row in which the information on the same mode as the mode of the adaptive cruise control currently set in the own vehicle 1 is stored in the column C4, and may only use the extracted data row to determine the acceleration suppression point as described above.

Further alternatively, for example, the server 2 may determine the acceleration suppression point by extracting the information that matches the driving characteristic of the rider of the own vehicle 1 from the statistical data 3 with reference to the rider's driving characteristic information in the column C5. For example, the server 2 may only extract the data row in which the information indicating that the evaluation value indicating the proficiency level is a value near the proficiency level of the rider of the own vehicle 1 is stored in the column C5, and may only use the extracted data row to determine the acceleration suppression point as described above.

Here, when determining the acceleration suppression point, the server 2 may refer to any plural types of the information among the additional information in the column C1, the column C2, the column C3, the column C4, and the column C5, and extract the information that matches the driving characteristic of the rider of the own vehicle 1 from the statistical data 3.

The above description has been made on the statistical data 3 with reference to Fig. 5. However, the example in Fig. 5 is merely one example. In the statistical data 3, at least the rider's operation information and the location information need to be associated with each other, and the statistical data 3 is not limited to the example in Fig. 5.

For example, one of the information on the operation to cancel the adaptive cruise control in the column B1 and the information on the operation to change the body behavior in the column B2 may be eliminated from the example in Fig. 5. Alternatively, for example, any or all of pieces of the additional information in the column C1, the column C2, the column C3, the column C4, and the column C5 may be eliminated from the example in Fig. 5. Further alternatively, for example, a column in which another type of information is stored may be added to the example in Fig. 5.

Alternatively, for example, instead of or in addition to the information on the operation to cancel the adaptive cruise control, information on an operation to change the adaptive cruise control may be employed as the information stored in the column B1. The information on the operation to change the adaptive cruise control corresponds to an example of the rider's operation information. An example of the operation to change the adaptive cruise control is an operation to reduce at least one of an acceleration upper limit value and an acceleration change rate upper limit value in the adaptive cruise control. In this case, for example, the server 2 may determine, as the acceleration suppression point, a point at which the operation to change the adaptive cruise control is frequently performed.

After step S102 in Fig. 4, in step S103, the execution section 22 determines whether the own vehicle 1 has entered the area including the acceleration suppression point.

In step S103, for example, the execution section 22 sets an area within a predetermined distance centered on the acceleration suppression point. Then, the execution section 22 determines whether the own vehicle 1 has entered the above area. In other words, a fact that the own vehicle 1 has entered the above area corresponds to that the own vehicle 1 is located in front of the acceleration suppression point by the predetermined distance.

If it is determined that the own vehicle 1 has not entered the area including the acceleration suppression point (step S103/NO), the processing in step S103 is repeated. On the other hand, if it is determined that the own vehicle 1 has entered the area including the acceleration suppression point (step S103/YES), the processing proceeds to step S104.

If it is determined YES in step S103, in step S104, the execution section 22 initiates the acceleration suppressing action.

As described above, the acceleration suppressing action is the action to suppress the acceleration of the own vehicle 1 in the adaptive cruise control, which is executed in the own vehicle 1. In the acceleration suppressing action, the execution section 22 suppresses the acceleration of the own vehicle 1, for example, by suppressing the action of the engine 11 and the hydraulic pressure control unit 12.

For example, the acceleration suppressing action may be action to reduce the acceleration generated to the own vehicle 1 to be lower than the acceleration at the time when it is determined that the acceleration suppressing action is unnecessary. Hereinafter, such operation will also be referred to as first action.

For example, in the adaptive cruise control, the execution section 22 controls the acceleration generated to the own vehicle 1 to be equal to or lower than the acceleration upper limit value. Then, in the first action, the execution section 22 reduces the acceleration upper limit value to be lower than the acceleration upper limit value at the time when it is determined that the acceleration suppressing action is unnecessary. As a result, the acceleration generated to the own vehicle 1 becomes lower than the acceleration at the time when it is determined that the acceleration suppressing action is unnecessary.

However, in the first action, the execution section 22 may reduce the acceleration generated to the own vehicle 1 by a method other than the method of reducing the acceleration upper limit value. For example, in the first action, the execution section 22 may reduce the acceleration generated to the own vehicle 1 by reducing a target value itself of the acceleration generated to the own vehicle 1.

Alternatively, for example, the acceleration suppressing action may be action to reduce an acceleration change rate generated to the own vehicle 1 to be lower than the acceleration change rate at the time when it is determined that the acceleration suppressing action is unnecessary. Hereinafter, such action will also be referred to as second action.

For example, in the adaptive cruise control, the execution section 22 controls the acceleration change rate generated to the own vehicle 1 to be equal to or lower than the acceleration change rate upper limit value. Then, in the second action, the execution section 22 reduces the acceleration change rate upper limit value to be lower than the acceleration change rate upper limit value at the time when it is determined that the acceleration suppressing action is unnecessary. As a result, the acceleration change rate generated to the own vehicle 1 becomes lower than the acceleration change rate at the time when it is determined that the acceleration suppressing action is unnecessary.

However, in the second action, the execution section 22 may reduce the acceleration change rate generated to the own vehicle 1 by a method other than the method of reducing the acceleration change rate upper limit value. For example, in the second action, the execution section 22 may reduce the acceleration change rate generated to the own vehicle 1 by reducing a target value itself of the acceleration change rate generated to the own vehicle 1.

The execution section 22 may execute both of the first action and the second action described above as the acceleration suppressing action, or may not execute one of the first action and the second action as the acceleration suppressing action. Alternatively, instead of or in addition to at least one of the first action and the second action, the execution section 22 may execute, as the acceleration suppressing action, action to change a target positional relationship between the own vehicle 1 and a target to such a positional relationship that the own vehicle 1 is located farther away from the target when compared to a case where it is determined that the acceleration suppressing action is unnecessary. An example of such acceleration suppressing action is action to extend the target inter-vehicle distance or the target passing time difference to be longer than the target inter-vehicle distance or the target passing time difference at the time when it is determined that the acceleration suppressing action is unnecessary.

After step S104, in step S105, the execution section 22 determines whether the own vehicle 1 has left the area including the acceleration suppression point.

As described above, for example, the above area is set to the area within the predetermined distance centered on the acceleration suppression point. In other words, a fact that the own vehicle 1 has left the above area corresponds to that the own vehicle 1 has traveled ahead of the acceleration suppression point by the predetermined distance.

If it is determined that the own vehicle 1 has not left the area including the acceleration suppression point (step S105/NO), the processing in step S105 is repeated. On the other hand, if it is determined that the own vehicle 1 has left the area including the acceleration suppression point (step S105/YES), the processing proceeds to step S106.

If it is determined YES in step S105, in step S106, the execution section 22 terminates the acceleration suppressing action, and the processing returns to step S103.

As described above, in the flowchart of Fig. 4, the processing in step S103 to step S106 is repeated. Thus, in the case where the plural areas, each of which includes the acceleration suppression point, exist on the travel route of the own vehicle 1, the execution section 22 executes the acceleration suppressing action in each of the areas. More specifically, the execution section 22 executes the acceleration suppressing action when the own vehicle 1 is located in the area including the acceleration suppression point.

As it has been described so far, in this embodiment, the server 2 collects and manages the information from the plural straddle-type vehicles 1 and transmits, to each of the straddle-type vehicles 1, the information used for the adaptive cruise control. More specifically, the server 2 generates the statistical data 3 on the basis of the various types of the information transmitted from each of the straddle-type vehicles 1, determines the acceleration suppression point on the basis of the statistical data 3, and transmits the information on the acceleration suppression point to each of the straddle-type vehicles 1. Then, in each of the straddle-type vehicles 1, the execution section 22 executes the acceleration suppressing action on the basis of the information on the acceleration suppression point.

As described above, in this embodiment, the execution section 22 of the controller 20 executes the acceleration suppressing action, which is the action to suppress the acceleration of the own vehicle 1 in the adaptive cruise control executed in the own vehicle 1, on the basis of the statistical data 3 in which the location information is associated with the rider's operation information of each of the plural vehicles as the straddle-type vehicles 1 other than the own vehicle 1 in the adaptive cruise control executed in each of the other vehicles. As a result, the acceleration of the own vehicle 1 in the adaptive cruise control can be suppressed in consideration of the operation performed by the rider of each of the other vehicles, which travel by using the adaptive cruise control, at each point. Thus, it is possible to suppress a reduction in safety caused by the acceleration of the own vehicle 1 in the adaptive cruise control. Therefore, it is possible to improve the safety of the straddle-type vehicle 1.

In addition, as described above, in this embodiment, the output section (the communication section 21 in the above example) of the controller 20 outputs the rider's operation information of the own vehicle 1 in the adaptive cruise control that is executed in the own vehicle 1. The rider's operation information is the information associated with the location information in the statistical data 3 that is used for the acceleration suppressing action as the action to suppress the acceleration of the vehicle as the straddle-type vehicle 1 other than the own vehicle 1 in the adaptive cruise control executed in the other vehicle. As a result, the acceleration of the other vehicle by the adaptive cruise control can be suppressed in consideration of the operation performed by the rider of the own vehicle 1, which travels by using the adaptive cruise control, at each point. Thus, it is possible to suppress the reduction in the safety caused by the acceleration of the other vehicle by the adaptive cruise control. Therefore, it is possible to improve the safety of the straddle-type vehicle 1.

The above description has been made on the processing example executed by the controller 20 with reference to the flowchart in Fig. 4. However, the processing executed by the controller 20 may be processing that is acquired by modifying the processing example described above.

For example, the processing that is executed by the controller 20 in the above example may partially be executed by the server 2, or the processing that is executed by the server 2 in the above example may partially be executed by the controller 20. For example, the statistical data 3 itself may be transmitted from the server 2 to the controller 20, and then the controller 20 may determine the acceleration suppression point on the basis of the received statistical data 3. Alternatively, for example, instead of transmitting the acceleration suppression point, the server 2 may transmit a control command for the acceleration suppressing action to the controller 20 on the basis of the statistical data 3.

### <Effects of Controller>

A description will be made on effects of the controller 20 according to the embodiment of the invention.

The controller 20 includes the execution section 22 that executes the speed control action (the adaptive cruise control in the above example) for automatically controlling the speed of the own vehicle 1 without relying on the accelerating/decelerating operation by the rider of the own vehicle 1. The execution section 22 executes the acceleration suppressing action, which is the action to suppress the acceleration of the own vehicle 1 in the speed control action executed in the own vehicle 1, on the basis of the statistical data 3 in which the location information is associated with the rider's operation information of each of the plural vehicles as the straddle-type vehicles 1 other than the own vehicle 1 in the speed control action executed in each of the other vehicles. As a result, the acceleration of the own vehicle 1 in the speed control action can be suppressed in consideration of the operation performed by the rider of each of the other vehicles, which travel by using the speed control action, at each point. Thus, it is possible to suppress the reduction in the safety caused by the acceleration of the own vehicle 1 in the speed control action. Therefore, it is possible to improve the safety of the straddle-type vehicle 1.

Preferably, in the controller 20, the operation information includes the information on the operation to cancel or change the speed control action. As a result, the acceleration of the own vehicle 1 in the speed control action can be suppressed in consideration of the operation performed by the rider of each of the other vehicles, which travel by using the speed control action, to cancel or change the speed control action at each point. For example, it is possible to execute the acceleration suppressing action to suppress the acceleration of the own vehicle 1 in the speed control action near the point at which the operation to cancel or change the speed control action is frequently performed. Therefore, it is possible to appropriately improve the safety of the straddle-type vehicle 1.

Preferably, in the controller 20, the operation information includes the information on the operation to change the body behavior. As a result, the acceleration of the own vehicle 1 in the speed control action can be suppressed in consideration of the operation to change the body behavior performed by the rider of each of the other vehicles, which travel by using the speed control action, at each point. For example, it is possible to suppress the acceleration of the own vehicle 1 in the speed control action by executing the acceleration suppressing action near the point at which the operation to change the body behavior is frequently performed. Therefore, it is possible to appropriately improve the safety of the straddle-type vehicle 1.

Preferably, in the controller 20, in addition to the location information, the environment information is further associated with the operation information in the statistical data 3. As a result, after the information that matches the current external environment of the own vehicle 1 is extracted from the statistical data 3, the acceleration of the own vehicle 1 in the speed control action can be suppressed in consideration of the operation performed by the rider of each of the other vehicles, which travel by using the speed control action, at each point. In this way, it is possible to optimize the point at which the acceleration suppressing action is executed in consideration of the current external environment of the own vehicle 1. Therefore, it is possible to further appropriately improve the safety of the straddle-type vehicle 1.

Preferably, in the controller 20, in addition to the location information, the vehicle information is further associated with the operation information in the statistical data 3. As a result, after the information that matches the vehicle information of the own vehicle 1 is extracted from the statistical data 3, the acceleration of the own vehicle 1 in the speed control action can be suppressed in consideration of the operation performed by the rider of each of the other vehicles, which travel by using the speed control action, at each point. In this way, it is possible to optimize the point at which the acceleration suppressing action is executed in consideration of the vehicle information of the own vehicle 1. Therefore, it is possible to further appropriately improve the safety of the straddle-type vehicle 1.

Preferably, in the controller 20, in addition to the location information, at least one of the occupant information and the loaded article information is further associated with the operation information in the statistical data 3. As a result, after the information that matches the occupant or loaded article information of the own vehicle 1 is extracted from the statistical data 3, the acceleration of the own vehicle 1 in the speed control action can be suppressed in consideration of the operation performed by the rider of each of the other vehicles, which travel by using the speed control action, at each point. In this way, it is possible to optimize the point at which the acceleration suppressing action is executed in consideration of the occupant or loaded article information of the own vehicle 1. Therefore, it is possible to further appropriately improve the safety of the straddle-type vehicle 1.

Preferably, in the controller 20, in addition to the location information, the setting information of the speed control action is further associated with the operation information in the statistical data 3. As a result, after the information that matches the setting of the speed control action for the own vehicle 1 is extracted from the statistical data 3, the acceleration of the own vehicle 1 in the speed control action can be suppressed in consideration of the operation performed by the rider of each of the other vehicles, which travel by using the speed control action, at each point. In this way, it is possible to optimize the point at which the acceleration suppressing action is executed in consideration of the setting of the speed control action for the own vehicle 1. Therefore, it is possible to further appropriately improve the safety of the straddle-type vehicle 1.

Preferably, in the controller 20, in addition to the location information, the rider's driving characteristic information is further associated with the operation information in the statistical data 3. As a result, after the information that matches the driving characteristic of the rider of the own vehicle 1 is extracted from the statistical data 3, the acceleration of the own vehicle 1 in the speed control action can be suppressed in consideration of the operation performed by the rider of each of the other vehicles, which travel by using the speed control action, at each point. In this way, it is possible to optimize the point at which the acceleration suppressing action is executed in consideration of the driving characteristic of the rider of the own vehicle 1. Therefore, it is possible to further appropriately improve the safety of the straddle-type vehicle 1.

Preferably, in the controller 20, the acceleration suppressing action is the action to reduce the acceleration generated to the own vehicle 1 to be lower than the acceleration at the time when it is determined that the acceleration suppressing action is unnecessary. As a result, it is possible to appropriately suppress the acceleration of the own vehicle 1 in the speed control action, which is executed in the own vehicle 1, by the acceleration suppressing action.

Preferably, in the controller 20, the acceleration suppressing action is the action to reduce the acceleration change rate generated to the own vehicle 1 to be lower than the acceleration change rate at the time when it is determined that the acceleration suppressing action is unnecessary. As a result, it is possible to appropriately suppress the acceleration of the own vehicle 1 in the speed control action, which is executed in the own vehicle 1, by the acceleration suppressing action.

Preferably, in the controller 20, the speed control action is the action to automatically control the speed of the own vehicle 1 such that the positional relationship between the own vehicle 1 and the target approaches the target positional relationship. As a result, it is possible to suppress the reduction in the safety caused by the acceleration of the own vehicle 1 in such speed control action (for example, the adaptive cruise control). Thus, in the case where the action to automatically control the speed of the own vehicle 1 such that the positional relationship between the own vehicle 1 and the target approaches the target positional relationship is executed as the speed control action, it is possible to improve the safety of the straddle-type vehicle 1.

In addition, the controller 20 includes the execution section 22 that executes the speed control action (the adaptive cruise control in the above example) for automatically controlling the speed of the own vehicle 1 without relying on the accelerating/decelerating operation by the rider of the own vehicle 1. Furthermore, the controller 20 includes the output section (the communication section 21 in the above example). The output section outputs the rider's operation information of the own vehicle 1 in the speed control action executed in the own vehicle 1. The rider's operation information is the information associated with the location information in the statistical data 3 that is used for the acceleration suppressing action as the action to suppress the acceleration of the vehicle as the straddle-type vehicle 1 other than the own vehicle 1 in the speed control action executed in the other vehicle. As a result, the acceleration of the other vehicle in the speed control action can be suppressed in consideration of the operation performed by the rider of the own vehicle 1, which travels by using the speed control action, at each point. Thus, it is possible to suppress the reduction in the safety caused by the acceleration of the other vehicle in the speed control action. Therefore, it is possible to improve the safety of the straddle-type vehicle 1.

The invention is not limited to the embodiment that has been described. For example, only a part of the embodiment may be implemented.

## Claims

1. A controller (20) that controls behavior of a straddle-type vehicle (1), the controller comprising:
an execution section (22) that executes speed control action to automatically control a speed of an own vehicle (1) without relying on an accelerating/decelerating operation by a rider of the own vehicle (1), wherein
the execution section (22) executes acceleration suppressing action, which is action to suppress acceleration of the own vehicle (1) in the speed control action executed in the own vehicle (1), on the basis of statistical data (3) in which location information is associated with a rider's operation information of each of plural vehicles as straddle-type vehicles (1) other than the own vehicle (1) in the speed control action executed in each of the other vehicles.

2. The controller according to claim 1, wherein
the operation information includes information on an operation to cancel or change the speed control action.

3. The controller according to claim 1, wherein
the operation information includes information on an operation to change vehicle body behavior.

4. The controller according to claim 1, wherein
in the statistical data (3), in addition to the location information, environment information is further associated with the operation information.

5. The controller according to claim 1, wherein
in the statistical data (3), in addition to the location information, vehicle information is further associated with the operation information.

6. The controller according to claim 1, wherein
in the statistical data (3), in addition to the location information, at least one of occupant information and loaded article information is further associated with the operation information.

7. The controller according to claim 1, wherein
in the statistical data (3), in addition to the location information, setting information of the speed control action is further associated with the operation information.

8. The controller according to claim 1, wherein
in the statistical data (3), in addition to the location information, the rider's driving characteristic information is further associated with the operation information.

9. The controller according to claim 1, wherein
the acceleration suppressing action is action to reduce acceleration generated to the own vehicle (1) to be lower than acceleration at the time when it is determined that the acceleration suppressing action is unnecessary.

10. The controller according to claim 1, wherein
the acceleration suppressing action is action to reduce an acceleration change rate generated to the own vehicle (1) to be lower than an acceleration change rate at the time when it is determined that the acceleration suppressing action is unnecessary.

11. The controller according to any one of claims 1 to 10, wherein
the speed control action is action to automatically control the speed of the own vehicle (1) such that a positional relationship between the own vehicle (1) and a target approaches a target positional relationship.

12. A controller (20) that controls behavior of a straddle-type vehicle (1), the controller comprising:
an execution section (22) that executes speed control action to automatically control a speed of an own vehicle (1) without relying on an accelerating/decelerating operation by a rider of the own vehicle (1), and further comprising:
an output section (21) that outputs the rider's operation information of the own vehicle (1) in the speed control action executed in the own vehicle (1), the rider's operation information being information associated with location information in statistical data (3) used for acceleration suppressing action that is action to suppress acceleration of another vehicle as a straddle-type vehicle (1) other than the own vehicle (1) in the speed control action executed in the another vehicle.

13. A control method for controlling behavior of a straddle-type vehicle (1), the control method comprising:
executing speed control action by an execution section (22) of a controller (20), the speed control action automatically controlling a speed of an own vehicle without relying on an accelerating/decelerating operation by a rider of the own vehicle (1), wherein
the execution section (22) executes acceleration suppressing action, which is action to suppress acceleration of the own vehicle (1) in the speed control action executed in the own vehicle (1), on the basis of statistical data (3) in which location information is associated with a rider's operation information of each of plural vehicles as straddle-type vehicles (1) other than the own vehicle (1) in the speed control action executed in each of the other vehicles.

14. A control method for controlling behavior of a straddle-type vehicle (1), the control method comprising:
executing speed control action by an execution section (22) of a controller (20), the speed control action automatically controlling a speed of an own vehicle (1) without relying on an accelerating/decelerating operation by a rider of the own vehicle (1), and further comprising:
outputting the rider's operation information of the own vehicle (1) by an output section (21) of the controller (20) in the speed control action executed in the own vehicle (1), the rider's operation information being information associated with location information in statistical data (3) used for acceleration suppressing action that is action to suppress acceleration of another vehicle as a straddle-type vehicle (1) other than the own vehicle (1) in the speed control action executed in the another vehicle.
